(19)

Europäisches Patentamt
European Patent Office
Office européen des brevets

(11) **EP 4 089 590 A1**

(12) **EUROPEAN PATENT APPLICATION**

(43) Date of publication:
**16.11.2022 Bulletin 2022/46**

(21) Application number: **22159684.4**

(22) Date of filing: **02.03.2022**

(51) International Patent Classification (IPC):
**G06N 3/08** *(2006.01)*     **G06N 20/00** *(2019.01)*
**G06F 9/50** *(2006.01)*

(52) Cooperative Patent Classification (CPC):
**G06N 3/08; G06F 9/5083; G06N 20/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.05.2021 JP 2021081513**

(71) Applicant: **FUJITSU LIMITED**
**Kawasaki-shi, Kanagawa 211-8588 (JP)**

(72) Inventor: **Miwa, Masahiro**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **MACHINE LEARNING PROGRAM, MACHINE LEARNING METHOD, AND INFORMATION PROCESSING DEVICE**

(57)     A machine learning program that causes at least one computer to execute a process, the process includes in a case where performances of one or more first computing nodes of a plurality of computing nodes are deteriorated in distributed training in machine learning by using the plurality of computing nodes, when a ratio of a process of the first computing node to whole process is equal to or less than a threshold, causing each second computing node other than the first computing node of the plurality of computing nodes perform machine learning in a first mode in which a learning result of the process of the first computing node is not reflected on the machine learning; and when the ratio is more than the threshold, causing each second computing node perform machine learning in a second mode in which training data to be processed by the process of the first computing node is distributed to and processed by the second computing nodes.

FIG. 3

DISTRIBUTION TRAINING MANAGEMENT UNIT ~ 100

PERFORMANCE INFORMATION COLLECTION UNIT ~ 101

REDUCTION PROCESS NUMBER DETERMINATION UNIT ~ 102

MODE DETERMINATION UNIT ~ 103

PROCESSING TIME CALCULATION UNIT ~ 104

EXECUTION PROCESS NUMBER DETERMINATION UNIT ~ 105

10-1
(10)

EP 4 089 590 A1

## Description

FIELD

The embodiment discussed herein is related to a machine learning program, a machine learning method, and an information processing device.

BACKGROUND

As a machine learning method in deep learning, distributed training by data parallelism is known. In distributed training, a plurality of processes (workers) having the same neural network (model) is provided, different training data portions are input to the plurality of processes, and machine learning is performed. Hereinafter, there is a case where machine learning is referred to as training or simply referred to as learning.

Here, in one process of machine learning, each processing of forward propagation (Fwd), backward propagation (Bwd), and update (Up.) is repeated. In distributed training using the plurality of processes, results of backward propagation in all the processes are aggregated before the update processing so as to acquire an average, and the update processing is executed by each process using this average value.

In backward propagation, weight gradient information indicating how much weight of a neural network is changed next to update the weight so as to reduce an error (Loss) can be obtained. Furthermore, in the update processing, values of various parameters are updated on the basis of the average of the weight gradients obtained by the respective processes.

The training results (weight gradient information) of the plurality of processes are aggregated through communication between the processes, and for example, the aggregation is achieved by Allreduce communication.

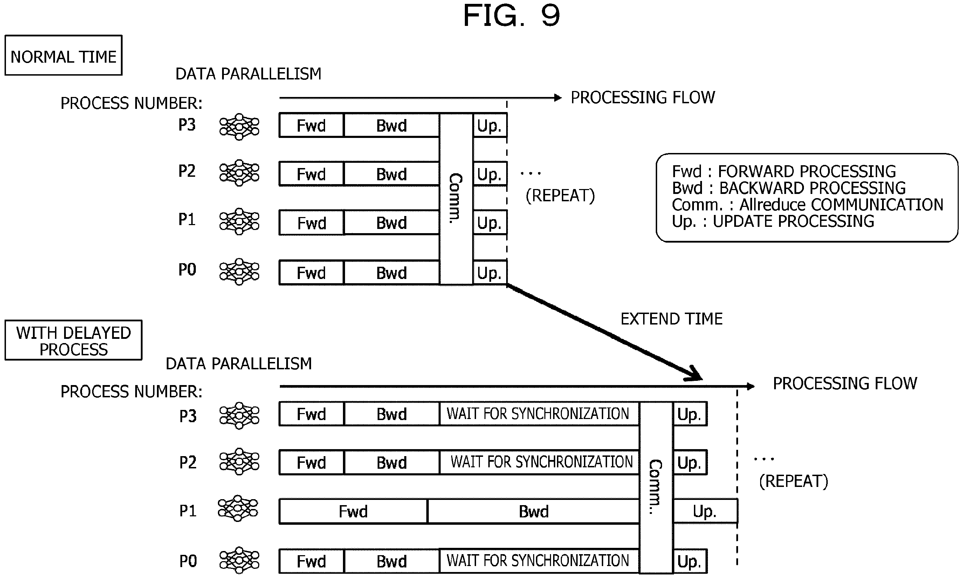

FIG. 9 is a diagram for explaining distributed training by data parallelism.

In FIG. 9, a processing time of each process at a normal time and a processing time of each process in a state where there is a delayed process (with delayed process) are compared and illustrated. In FIG. 9, data parallel processing is executed by four processes P0 to P3, and in a state with a delayed process, forward propagation and backward propagation of the process P1 delay.

In distributed training by data parallelism, communication is performed between the processes when the training results of the respective processes are aggregated. However, if even one process delays, the entire processing time is extended for synchronization waiting by other processes. In FIG. 9, synchronization wait occurs in which the processes P0, P2, and P3 wait for completion of backward propagation by the process P1.

Therefore, a method has been known for preventing performance deterioration due to such a delayed process. There is one method for removing a process in which a delay occurs (process P1 in FIG. 9) from the training result aggregation target and continuing training using learning results of only the remaining processes (processes P0, P2, and P3 in FIG. 9) so as to prevent speed reduction. This method is called detach mode.

U.S. Patent Application Publication No. 2016/0092765, Japanese Laid-open Patent Publication No. 2020-177343, and Koichi SHIRAHATA, et al., "Preliminary Performance Analysis of Distributed DNN Training with Relaxed Synchronization" [online] <URL: https://www.jstage.jst.go.jp/article/transele/advpub/0/advpub_2020LHS0001/_a rticle/-char/ja/> are disclosed as related art.

SUMMARY

[TECHNICAL PROBLEM]

However, in the detach mode, there is a problem in that machine learning becomes insufficient and accuracy is deteriorated by excluding a process in which a delay occurs from a training result aggregation target. For example, there is a case where the accuracy does not reach desired certain accuracy (for example, 73.3%) by excluding the plurality of processes from an aggregation target through the detach mode, in a case where a processing speed of the plurality of processes is reduced.

In one aspect, an object of the embodiment is to improve accuracy of distributed training in machine learning.

[SOLUTION TO PROBLEM]

According to an aspect of the embodiments, a machine learning program that causes at least one computer to execute a process, the process includes in a case where performances of one or more first computing nodes of a plurality of computing nodes are deteriorated in distributed training in machine learning by using the plurality of computing nodes, when a ratio of a process of the first computing node to whole process is equal to or less than a threshold, causing each second computing node other than the first computing node of the plurality of computing nodes perform machine learning in a first mode in which a learning result of the process of the first computing node is not reflected on the machine learning; and when the ratio is more than the threshold, causing each second computing node perform machine learning in a second mode in which training data to be processed by the process of the first computing node is distributed to and processed by the second computing nodes.

[ADVANTAGEOUS EFFECTS OF INVENTION]

According to one embodiment, accuracy of distributed training in machine learning can be improved.

## BRIEF DESCRIPTION OF DRAWINGS

FIG. 1 is a diagram schematically illustrating a configuration of a computer system as an example of an embodiment;

FIG. 2 is a diagram illustrating a hardware configuration of a computing node in the computer system as an example of the embodiment;

FIG. 3 is a diagram illustrating a functional configuration of a master computing node in the computer system as an example of the embodiment;

FIG. 4 is a diagram for explaining an optimization operation mode of the computer system as an example of the embodiment;

FIG. 5 is a diagram illustrating a data processing amount per process in a detach mode and that in a shrink mode in the computer system as an example of the embodiment;

FIG. 6 is a diagram for explaining processing by a processing time calculation unit in the computer system as an example of the embodiment;

FIG. 7 is a flowchart for explaining a method for determining the number of computing nodes at the time of distributed training in the computer system as an example of the embodiment;

FIG. 8 is a flowchart for explaining a method for determining the number of computing nodes at the time of distributed training in the computer system as an example of the embodiment; and

FIG. 9 is a diagram for explaining distributed training by data parallelism.

## DESCRIPTION OF EMBODIMENTS

Hereinafter, an embodiment of a machine learning program, a machine learning method, and an information processing device will be described with reference to the drawings. Note that the embodiment to be described below is merely examples, and there is no intention to exclude application of various modifications and technologies not explicitly described in the embodiment. In other words, for example, the present embodiment may be variously modified and implemented without departing from the scope of the gist thereof. Furthermore, each drawing is not intended to include only components illustrated in the drawings, and may include another function and the like.

(A) Configuration

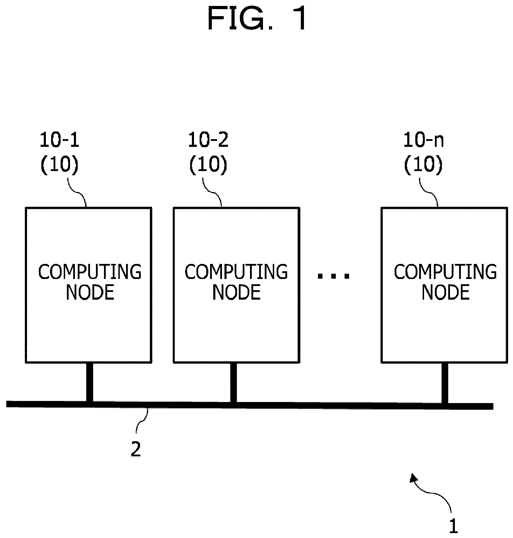

FIG. 1 is a diagram schematically illustrating a configuration of a computer system 1 as an example of an embodiment. As illustrated in FIG. 1, the computer system 1 as an example of the embodiment includes a plurality of computing nodes 10-1 to 10-n (n in example illustrated in FIG. 1).

These computing nodes 10-1 to 10-n are connected to be communicable with each other via a network 2. The computing nodes 10-1 to 10-n have configurations similar to each other. Hereinafter, in a case where the computing nodes 10-1 to 10-n are not particularly distinguished, the computing nodes 10-1 to 10-n are referred to as a computing node 10.

This computer system 1 performs machine learning in deep learning, and achieves distributed training by data parallelism using the plurality of computing nodes 10. One or more processes (worker) having the same neural network (model) are provided in each computing node 10, and these computing nodes 10 respectively perform processes of machine learning in parallel. In this computer system 1, different training data portions are input to the plurality of processes in parallel, and distributed machine learning (training) is performed.

In the present embodiment, an example is indicated in which one process is assigned in each computing node 10.

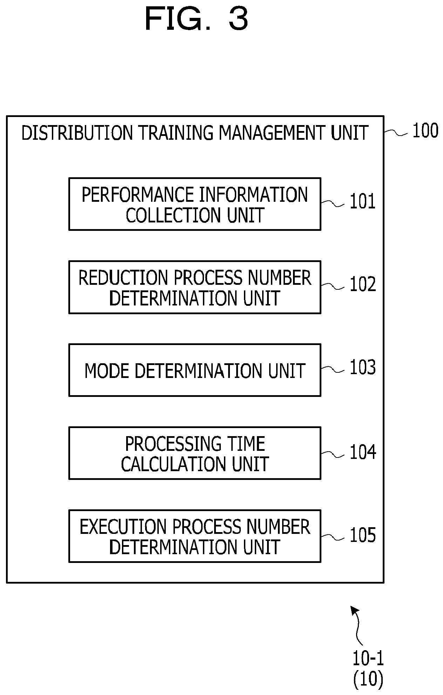

Furthermore, in this computer system 1, the computing node 10-1 of the plurality of computing nodes 10 functions as a master (primary) and achieves a function as a distributed training management unit 100 to be described later with reference to FIG. 3. Furthermore, at the time of a failure of this master computing node 10-1, any one computing node 10 of the computing nodes 10-2 to 10-n (for example, computing node 10-2) takes over the operation of the computing node 10-1 as a master.

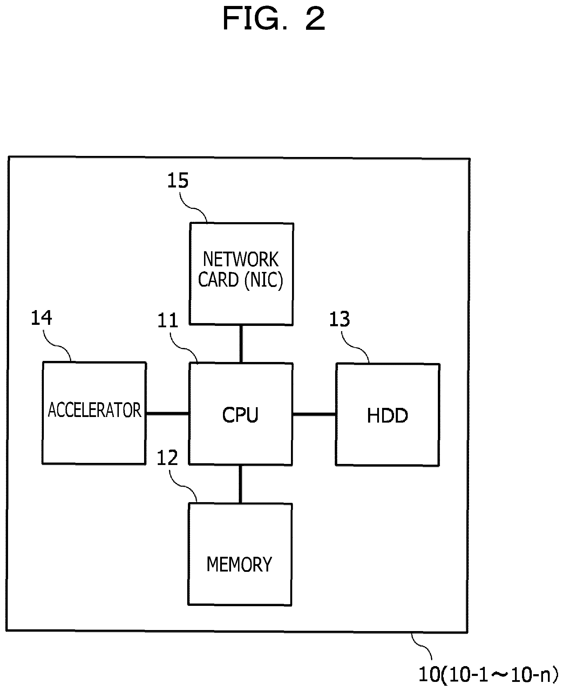

FIG. 2 is a diagram illustrating a hardware configuration of the computing node 10 in the computer system 1 as an example of the embodiment.

As illustrated in FIG. 2, the computing node 10 includes a central processing unit (CPU) 11, a memory 12, a hard disk drive (HDD) 13, an accelerator 14, and a network interface card (NIC) 15.

The memory 12 is used as a main storage device of the computing node 10. The memory 12 temporarily stores at least a part of operating system (OS) programs and application programs executed by the CPU 11. Furthermore, the memory 12 stores various types of data needed for processing by the CPU 11. The application program may also include a machine learning program (not illustrated) executed by the CPU 11 so as to achieve a function as the distributed training management unit 100 according to the present embodiment by the computing node 10.

The HDD 13 magnetically reads and writes data from and into a built-in disk. The HDD 13 is used as an auxiliary storage device of the computing node 10. The HDD 13 stores OS programs, application programs, and various types of data. Note that, as the auxiliary storage device, a storage class memory (SCM) and a semiconductor storage device (solid state drive (SSD)) such as a flash memory can be used.

The accelerator 14 is a processing device that performs specific arithmetic processing and is, for example, a graphics processing unit (GPU). In the present embodiment, an example is indicated in which the CPU 11 executes the application program described above (machine learning program) so as to achieve the function as the distributed training management unit 100. However, the present embodiment is not limited to this. In other words, for example, the accelerator 14 may also execute the machine learning program so as to achieve the function as the distributed training management unit 100.

The NIC 15 is a network interface. The NIC 15 is connected to the network 2. The NIC 15 transmits and receives data to and from another computing node 10 and another communication device (not illustrated) via the network 2. The NIC 15 may also be referred to as a network card 15.

With the computing node 10 having the hardware configuration as described above, the function (distributed training function) as the distributed training management unit 100 according to the present embodiment to be described later can be achieved.

The computing node 10 that functions as a master (for example, computing node 10-1) executes a program (machine learning program or the like) recorded, for example, in a computer-readable non-transitory recording medium so as to achieve a distributed training management function according to the present embodiment. A program in which processing content executed by a computer 10 is described can be recorded in various recording media. For example, the program executed by the computer 10 can be stored in the HDD 13. The CPU 11 loads at least a part of the program in the HDD 13 on the memory 12 and executes the loaded program.

Furthermore, the program executed by the computer 10 (CPU 11) can be recorded in a non-transitory portable recording medium such as an optical disk, a memory device, or a memory card. The program stored in the portable recording medium can be executed after being installed to the HDD 13, for example, under control by the CPU 11. Furthermore, the CPU 11 may also directly read and execute the program from the portable recording medium.

The CPU (processing unit) 11 controls the entire computing node 10. The CPU 11 may also be a multiprocessor. Instead of the CPU 11, any one of a micro processing unit (MPU), a digital signal processor (DSP), an application specific integrated circuit (ASIC), a programmable logic device (PLD), and a field programmable gate array (FPGA) may also be used. Furthermore, the CPU 11 may also be a combination of two or more types of elements of the CPU, MPU, DSP, ASIC, PLD, and FPGA.

FIG. 3 is a diagram illustrating a functional configuration of the master computing node 10-1 in the computer system 1 as an example of the embodiment.

As illustrated in FIG. 3, the CPU 11 of the master computing node 10-1 achieves the function as the distributed training management unit 100.

The distributed training management unit 100 has functions as a performance information collection unit 101, a reduction process number determination unit 102, a mode determination unit 103, a processing time calculation unit 104, and an execution process number determination unit 105.

The performance information collection unit 101 collects performance information of each computing node 10 (CPU 11). The performance information collection unit 101 may also collect, for example, a throughput performance of each computing node 10 as the performance information. A throughput indicates a data processing amount per unit time and may also be, for example, the number of processed images per unit time. Furthermore, the collection of the performance information may be achieved by using various known methods, and description thereof will be omitted.

It is desirable that the performance information collection unit 101 collect the performance information of each computing node 10 at a predetermined timing after training start of this computer system 1.

The reduction process number determination unit 102 counts the number of processes in which a delay occurs, for example, in a case where processing of one or more computing nodes 10 (process) delays and other computing node 10 waits for synchronization. Hereinafter, there is a case where the computing node 10 in which a delay occurs is referred to as a delay computing node 10.

For example, in a case where the processing performance of the computing node 10 is equal to or less than a predetermined threshold or in a case where a response delays equal to or more than a predetermined threshold, the reduction process number determination unit 102 may also determine that the performance of the corresponding computing node 10 is deteriorated and may also recognize the corresponding computing node 10 as the delay computing node 10.

The reduction process number determination unit 102 counts the number of processes of one or more delay computing nodes 10. A process learning result corresponding to the delay computing node 10 is not reflected to the machine learning in the detach mode. Hereinafter, there is a case where a total number of processes corresponding to each delay computing node 10 is referred to as the number of reduced processes.

The mode determination unit 103 determines an optimization operation mode of machine learning at the time of the occurrence of the delay computing node 10 on the basis of the number of reduced processes calculated by the reduction process number determination unit 102.

In this computer system 1, as an optimization method of machine learning at the time of the occurrence of the delay computing node 10, detach mode (first mode) and shrink mode (second mode) are included, and one of the two types of operation modes is selectively used. The detach mode (first mode) and the shrink mode (second mode) are countermeasures (performance stabilization method) for stabilizing a calculation speed of the corresponding computer system 1 in a case where processing performances of the plurality of computing nodes 10 vary.

In the detach mode, a process of a delay computing node (first computing node) 10 is separated from a machine learning group, and a process learning result of the delay computing node 10 is excluded from a training result aggregation target.

In the shrink mode, execution of the process by the delay computing node 10 is prevented, and machine learning is performed by a process other than the corresponding process. Training data to be processed by the process of the delay computing node 10 (first computing node) is distributed to and executed by the computing node 10 (process, second computing node) other than the delay computing node 10 from among the plurality of computing nodes 10.

For example, in a case where distributed training is performed with 32-process execution at the time of start, a learning hyperparameter for 32 processes is set. However, in a case where two processes are deleted, 30-process execution is performed in the detach mode as remaining the setting at the time of 32 processes. On the other hand, in the shrink mode, 30-process execution is performed as changing the setting to setting for 30 processes.

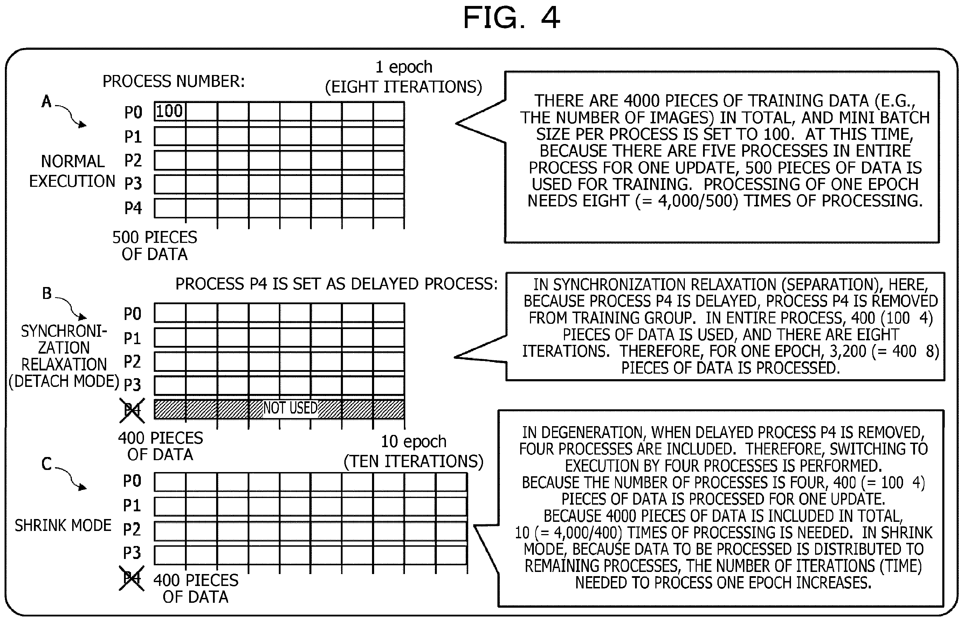

FIG. 4 is a diagram for explaining an optimization operation mode of the computer system 1 as an example of the embodiment and illustrates a difference between the detach mode and the shrink mode.

In FIG. 4, the reference A indicates a normal execution state in which the delay computing node 10 does not occur. Furthermore, the reference B indicates processing at the time of detach mode, and the reference C indicates processing at the time of shrink mode.

In the example illustrated in FIG. 4, an example is illustrated in which five processes P0 to P4 perform distributed training using 4000 pieces of training data (for example, 4000 images).

Here, as indicated by the reference A, a mini batch size per process is set to 100. At this time, because there are five processes in total, 500 pieces of data is used for machine learning for one update. Therefore, processing of one epoch (epoch) needs eight (= 4000/500) iterations.

In the example indicated by the reference B in FIG. 4, a process P4 corresponds to the process of the delay computing node 10. In the detach mode, the delayed process P4 is excluded from a learning group. As a result, 400 (= 100 × 4) pieces of data is used for the entire process, and eight iterations are needed for one epoch. Therefore, 3200 (= 400 × 8) pieces of data is processed.

In the example indicated by the reference C in FIG. 4, the process P4 corresponds to the process of the delay computing node 10. In the shrink mode, machine learning is performed by the four processes P0 to P3 excluding the delayed process P4.

In such a shrink mode, 400 (= 100 × 4) pieces of data is processed for one update. Because the total number of pieces of data is 4000, 10 (= 4000/400) times of processing (update) is needed so as to perform machine learning by the four processes P0 to P3.

In the shrink mode, data to be processed by the process P4 is distributed to and processed by the remaining processes P0 to P3. Therefore, the number of iterations (time) needed to process one epoch increases.

In the example indicated by the reference C in FIG. 4, it is indicated that the processing for 10 iterations is executed by the processes P0 to P3, and the number of iterations increases as compared with a state of the normal execution (refer to reference A).

Note that, in the shrink mode, all the training data may also be distributed to the computing nodes other than the delay computing node 10, and in the shrink mode, after a certain percentage of the training data is deleted, the remaining training data may also be distributed to and learned by the computing nodes other than the delay computing node 10.

For example, in a case where there are 100 pieces of training data, all the 100 pieces of training data may also be distributed to the computing nodes other than the delay computing node 10. Alternatively, a certain percentage (for example, 6%) is excluded, and remaining 94 pieces of data may also be distributed to and learned by the computing nodes other than the delay computing node 10.

By deleting a certain percentage of the training data and distributing the remaining data, a repetition time in machine learning can be shortened as compared with a case where the data is not deleted.

The mode determination unit 103 determines whether distributed training is performed in the detach mode or the shrink mode on the basis of the number of reduced processes determined by the reduction process number determination unit 102. For example, the mode determination unit 103 compares a ratio of the number of reduced processes with respect to the total number of processes with a threshold (for example, 6%), and in a case where the ratio of the number of reduced processes is equal to or less than the threshold the mode determination unit 103 selects the detach mode. Furthermore, in a case where the ratio of the number of reduced processes is equal to or less than the threshold, the mode determination unit 103 selects the detach mode. Hereinafter, there is a case where the ratio of the number of reduced processes with respect to the total number of processes is referred to as a reduced process number ratio.

As described above, a data processing amount per process in the detach mode is different from that in the shrink mode.

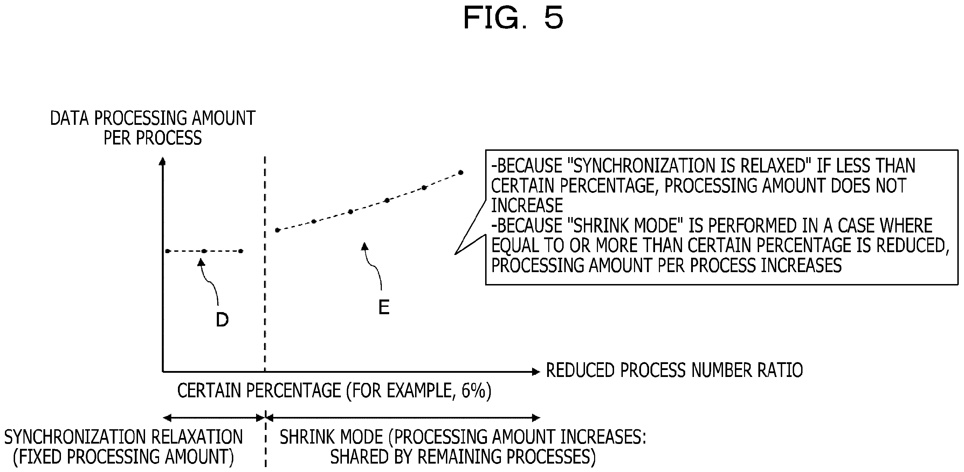

FIG. 5 is a diagram illustrating a data processing amount per process in the detach mode and that in the shrink mode in the computer system 1 as an example of the embodiment.

In FIG. 5, the horizontal axis indicates the reduced process number ratio, and the vertical axis indicates a data processing amount per process in a process other than a reduction process.

In a case where the reduced process number ratio is equal to or less than a predetermined threshold, the mode determination unit 103 determines the detach mode, and in a case where the reduced process number ratio is more than the threshold, the mode determination unit 103 selects the shrink mode. Therefore, in a case where the reduced process number ratio is equal to or less than the threshold, the data processing amount per process is fixed (refer to reference D in FIG. 5). On the other hand, in a case where the reduced process number ratio is more than the threshold, the data processing amount per process of the process other than the reduction process increases according to an increase in the reduced process number ratio (refer to reference E in FIG. 5).

The processing time calculation unit 104 calculates a processing time in distributed training performed using the plurality of computing nodes 10 on the basis of the performance information of each computing node 10 collected by the performance information collection unit 101.

The processing time calculation unit 104 sorts the plurality of computing nodes 10 (process) according to the performance information (throughput) on the basis of the performance information of each computing node 10 collected by the performance information collection unit 101. Then, the processing time calculation unit 104 selects one or more computing nodes 10 in order from the computing node 10 having the lowest processing performance. This processing is synonymous with selecting the process of the selected computing node 10.

There is a case where the one or more selected computing nodes 10 are referred to as reduction computing nodes 10, and the process of the reduction computing node 10 is referred to as a reduction process.

Furthermore, there is a case where the plurality of computing nodes 10 other than the reduction computing node 10 among all the computing nodes 10 is referred to as a remaining computing node group, and the plurality of processes in the remaining computing node group is referred to as a remaining process group.

The processing time calculation unit 104 calculates (estimation, simulation) a processing time of a process (remaining process group) executed by the remaining computing node group. The processing time calculation unit 104 estimates each processing time of machine learning by the plurality of types of remaining computing node groups (node group) having different numbers of included computing nodes 10, on the basis of the throughput of each computing node 10.

The processing time calculation unit 104 adopts a throughput of the computing node 10 having the lowest processing performance (throughput) among the plurality of computing nodes 10 included in the remaining computing node group as a throughput of the remaining computing node group.

The processing time calculation unit 104 calculates (estimates) a processing time of the corresponding remaining computing node group (remaining process group) by dividing a data amount (processing data amount) processed by the remaining computing node group by the throughput of the remaining computing node group.

The processing time calculation unit 104 sequentially calculates the processing times by the remaining computing node group while incrementing the reduction computing node 10 one by one.

For example, in a case where 32 processes are used as a reference (at the time of execution start), the processing time calculation unit 104 first estimates a processing time in a case where the remaining process group includes 31 processes. Next, the processing time calculation unit 104 estimates a processing time in a case where the remaining process group includes 30 processes. Hereinafter, the processing time calculation unit 104 calculates each processing time of the remaining process group with each number of processes while reducing the number of processes of the remaining process group.

The processing time calculation unit 104 may also simulate processing times of the remaining process group in all patterns while reducing the processes of the remaining process group until the number of processes of the remaining process group becomes one. Furthermore, the processing time calculation unit 104 may also perform simulation of the processing time of the remaining process group, for example, until the number of processes of the remaining process group becomes a half of the reference. In other words, for example, in the example described above (reference 32 processes), the simulation may also be terminated at the time when the number of processes of the remaining process group reaches a half of the reference number of processes (16 processes), and the simulation may be performed while appropriately changing the number of processes.

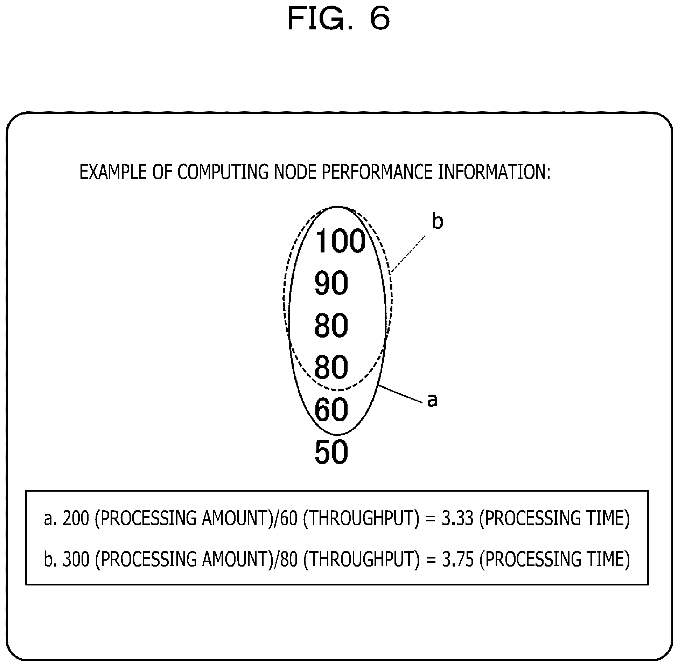

FIG. 6 is a diagram for explaining processing by the processing time calculation unit 104 in the computer system 1 as an example of the embodiment.

In FIG. 6, regarding six computing nodes 10, an example is illustrated in which respective processing times of a remaining process group (refer to reference a) of which the number of computing nodes 10 (the number of processes) is five and a remaining process group (refer to reference b) of which the number of computing nodes 10 (the number of processes) is four are calculated.

In the following example, it is assumed that there be 1200 pieces of training data. Furthermore, it is assumed that the mode determination unit 103 determine that accuracy reaches target accuracy in the detach mode when the number of processes is equal to or less than four and determine that the accuracy reaches the target accuracy in the shrink mode when the number of processes is more than five.

The processing time calculation unit 104 calculates a processing time of the corresponding remaining computing node group (remaining process group) by dividing a data amount (processing data amount) processed by the remaining computing node group by the throughput of the remaining computing node group.

In the example illustrated in FIG. 6, in the remaining process group (refer to reference a) of which the number of computing nodes 10 (the number of processes) is five, a throughput of the computing node 10 having the lowest processing performance (throughput) is 60. Furthermore, in the remaining process group (refer to reference a) of which the number of computing nodes 10 (the number of processes) is five, a data processing amount per process per epoch in the detach mode is 200 (= 1200/6).

Therefore, the processing time calculation unit 104 calculates a processing time of the remaining process group (refer to reference a) of which the number of computing nodes 10 (the number of processes) is five according to the following formula.

$$200/60 = 3.33$$

On the other hand, in the example illustrated in FIG. 6, in the remaining process group (refer to reference b) of which the number of computing nodes 10 (the number of processes) is four, a throughput of the computing node 10 having the lowest processing performance (throughput) is 80. Furthermore, in the remaining process group (refer to reference b) of which the number of computing nodes 10 (the number of processes) is four, a data processing amount per process per epoch in the shrink mode is 300 (= 1200/4).

Therefore, the processing time calculation unit 104 calculates a processing time of the remaining process group (refer to reference b) of which the number of computing nodes 10 (the number of processes) is four according to the following formula.

$$300/80 = 3.75$$

The execution process number determination unit 105 determines the number of processes to be processed in parallel in distributed training (the number of execution processes) on the basis of the processing time of the remaining process group with each number of processes calculated by the processing time calculation unit 104.

The execution process number determination unit 105 determines the number of processes of the remaining process group of which the processing time is the shortest among the processing times of the remaining process group with each number of processes calculated by the processing time calculation unit 104, as the number of execution processes.

For example, in the example illustrated in FIG. 6, the execution process number determination unit 105 determines the number of processes five of the remaining process group (refer to reference a) of which the processing time is 3.33 and the number of computing nodes 10 (the number of processes) is five as the number of execution processes.

(B) Operation

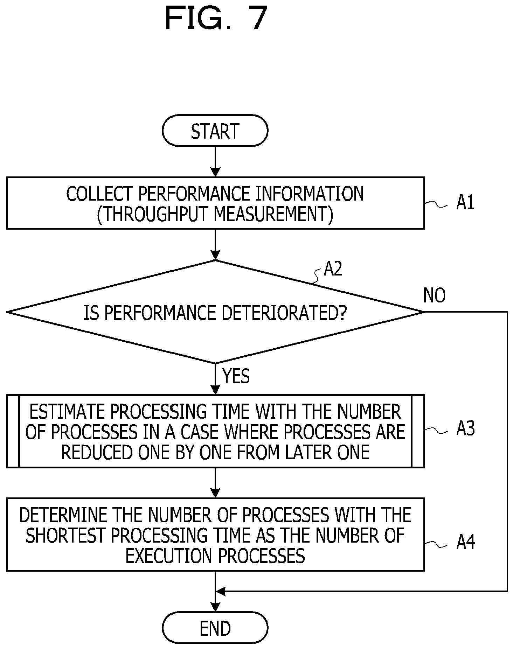

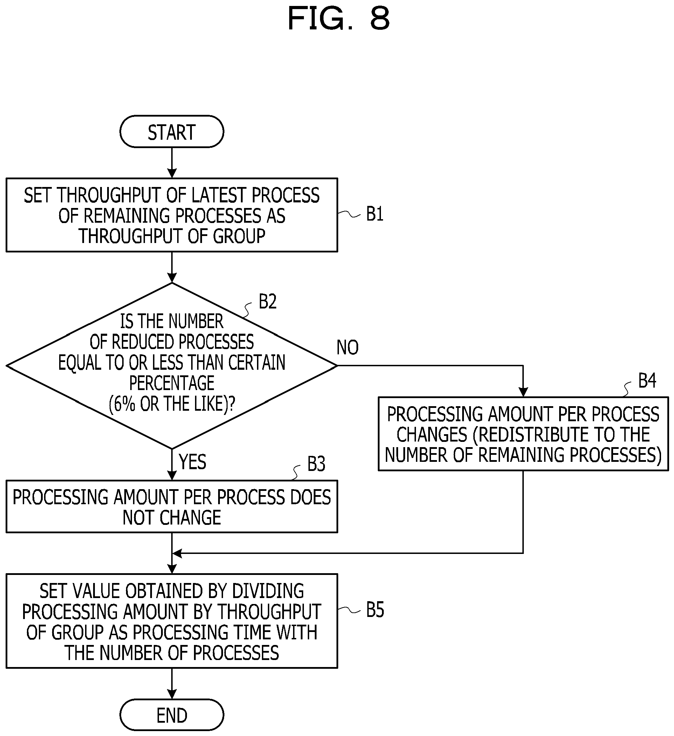

A method for determining the number of computing nodes at the time of distributed training by the computer system 1 as an example of the embodiment configured as described above will be described with reference to the flowcharts in FIGs. 7 and 8. Note that, FIG. 7 is a flowchart (steps A1 to A4) illustrating an outline, and FIG. 8 is a flowchart (steps B1 to B5) illustrating details of processing in step A3 in FIG. 7.

These flowcharts illustrated in FIGs. 7 and 8 are executed in a case where deterioration in performances of some computing nodes 10 of the plurality of computing nodes 10 is detected.

In step A1 in FIG. 7, the performance information collection unit 101 measures (collect) a throughput (performance information) of each computing node 10 (CPU 11).

In step A2 in FIG. 7, the processing time calculation unit 104 determines whether or not the performance of any one of computing nodes 10 is deteriorated on the basis of the performance information of each computing node 10 collected by the performance information collection unit 101.

In a case where the deterioration in the performance is not detected in any one of computing nodes 10 (refer to NO route in step A2), the processing ends. On the other hand, in a case where the deterioration is detected in any one of computing nodes 10 (refer to YES route in step A2), the procedure proceeds to step A3 in FIG. 7.

In step A3, the processing time calculation unit 104 calculates a processing time in distributed training performed using the plurality of computing nodes 10 on the basis of the performance information of each computing node 10 collected by the performance information collection unit 101.

The details of the processing in step A3 will be described with reference to FIG. 8.

In step B1 in FIG. 8, the processing time calculation unit 104 sorts the plurality of computing nodes 10 (process) according to the performance information (throughput). Then, the processing time calculation unit 104 sets the throughput of the computing node 10 having the lowest throughput among the plurality of computing nodes 10 included in the remaining computing node group as the throughput of the corresponding remaining computing node group.

In step B2 in FIG. 8, the mode determination unit 103 compares a ratio of the number of reduced processes with respect to the total number of processes with a threshold (for example, 6%) and confirms whether or not the ratio of the number of reduced processes with respect to the total number of processes is equal to or less than the threshold. Note that the threshold is not limited to 6% and can be appropriately changed and executed.

As a result of the confirmation, in a case where the ratio of the number of reduced processes with respect to the total number of processes is equal to or less than the threshold (refer to YES route in step B2), the procedure proceeds to step B3 in FIG. 8.

In step B3, the mode determination unit 103 selects the detach mode. In the detach mode, the data processing amount per process does not change. Thereafter, the procedure proceeds to step B5 in FIG. 8.

Furthermore, as a result of the confirmation in step B2, in a case where the ratio of the number of reduced processes with respect to the total number of processes is not equal to or less than the threshold (refer to NO route in step B2), in other words, for example, in a case where the ratio of the number of reduced processes with respect to the total number of processes is more than the threshold, the procedure proceeds to step B4 in FIG. 8.

In step B4, the mode determination unit 103 selects the shrink mode. In the shrink mode, the data processing amount per process changes. In other words, for example, the processes of the delay computing node 10 are distributed to the computing nodes 10 other than the delay computing node 10 of the plurality of computing nodes 10. Thereafter, the procedure proceeds to step B5.

In step B5, the processing time calculation unit 104 calculates a processing time of the corresponding remaining computing node group (remaining process group) by dividing a data amount (processing data amount) processed by the remaining computing node group by the throughput of the remaining computing node group. Thereafter, the procedure proceeds to step A4 in FIG. 7.

In step A4 in FIG. 7, the execution process number determination unit 105 determines the number of processes of the remaining process group of which the processing time is the shortest among the processing times of the remaining process group with each number of processes calculated by the processing time calculation unit 104, as the number of execution processes. Thereafter, the processing ends.

(C) Effects

In this way, according to the computer system 1 as an example of the embodiment, the processing time calculation unit 104 sequentially calculates the processing times by the remaining computing node group while incrementing the reduction computing node 10 one by one. Then, the execution process number determination unit 105 determines the number of processes of the remaining process group of which the processing time is the shortest among the processing times of the remaining process group with each number of processes calculated by the processing time calculation unit 104, as the number of execution processes. This can shorten a time required before training in distributed training is completed, and in particular, for example, even in a case where the processing performances of the computing nodes 10 vary, efficient distributed training can be achieved.

Furthermore, the mode determination unit 103 determines an optimization operation mode of machine learning at the time of the occurrence of the delay computing node 10 on the basis of the number of reduced processes calculated by the reduction process number determination unit 102.

Specifically, for example, the mode determination unit 103 adopts the detach mode in which the processing amount of each computing node 10 of the remaining process group does not increase in a case where the ratio of the reduction process is equal to or less than the threshold. As a result, an effect on the deterioration in the machine accuracy caused by not reflecting the process on machine learning in the detach mode can be suppressed, the deterioration in the machine accuracy is prevented, and it is possible to secure desired accuracy. Furthermore, even in a case where some computing nodes 10 delay, the time required before machine learning is completed can be shortened.

Furthermore, in a case where the ratio of the reduction process is more than the threshold, by adopting the shrink mode in which a processing amount increases for each computing node 10 of the remaining process group, it is possible to prevent the deterioration in the machine accuracy and to secure the desired accuracy.

(D) Others

Each configuration and each processing of the present embodiment may also be selected or omitted as needed or may be appropriately combined.

Then, the disclosed technology is not limited to the above-described embodiment, and various modifications may be made and implemented without departing from the spirit of the present embodiment.

For example, in the embodiment described above, an example is indicated in which the computing node 10-1 of the plurality of computing nodes 10 included in the computer system 1 functions as a master (primary) and achieves the function as the distributed training management unit 100. However, the embodiment is not limited to this. A management device different from the computing node 10 may be provided in the computer system 1, and the corresponding management device may also achieve the function as the distributed training management unit 100.

Furthermore, in the embodiment described above, an example is indicated in which one of the detach mode and the shrink mode is selected as the performance stabilization method in a case where the processing performances of the plurality of computing nodes 10 vary. However, the embodiment is not limited to this. A method other than the detach mode and the shrink mode may also be used as the stabilization method.

Furthermore, the present embodiment may be implemented and manufactured by those skilled in the art according to the disclosure described above.

**Claims**

1. A machine learning program that causes at least one computer to execute a process, the process comprising:

   in a case where performances of one or more first computing nodes of a plurality of computing nodes are deteriorated in distributed training in machine learning by using the plurality of computing nodes,

   when a ratio of a process of the first computing node to whole process is equal to or less than a threshold, causing each second computing node other than the first computing node of the plurality of computing nodes perform machine learning in a first mode in which a learning result of the process of the first computing node is not reflected on the machine learning; and
   when the ratio is more than the threshold, causing each second computing node perform machine learning in a second mode in which training data to be processed by the process of the first computing node is distributed to and processed by the second computing nodes.

2. The machine learning program according to claim 1, wherein the process further comprising:

   acquiring each time of processing in the first mode and the second mode of a plurality of types of computing node groups of which the numbers of included computing nodes are different from each other, based on performance information of each of the plurality of computing nodes; and
   setting a plurality of computing nodes included in a computing node group selected from the plurality of computing node groups as the second computing nodes based on the time.

3. A machine learning method for a computer to execute a process comprising:
   in a case where performances of one or more first computing nodes of a plurality of computing nodes are deteriorated in distributed training in machine learning by using the plurality of computing nodes,

   when a ratio of a process of the first computing node to whole process is equal to or less than a threshold, causing each second computing node other than the first computing node of the plurality of computing nodes perform machine learning in a first mode in which a learning result of the process of the first computing node is not reflected on the machine learning; and
   when the ratio is more than the threshold, causing each second computing node perform machine learning in a second mode in which training data to be processed by the process of the first computing node is distributed to and processed by the second computing nodes.

4. The machine learning method according to claim 3, wherein the process further comprising:

   acquiring each time of processing in the first mode and the second mode of a plurality of types of computing node groups of which the numbers of included computing nodes are different from each other, based on performance information of each of the plurality of computing nodes; and
   setting a plurality of computing nodes included in a computing node group selected from the plurality of computing node groups as the second computing nodes based on the time.

5. An information processing device comprising:

   one or more memories; and
   one or more processors coupled to the one or more memories and the one or more processors configured to:
   in a case where performances of one or more first computing nodes of a plurality of computing nodes are deteriorated in distributed training in machine learning by using the plurality of computing nodes,

   when a ratio of a process of the first computing node to whole process is equal to or less than a threshold, cause each second computing node other than the first computing node of the plurality of computing nodes perform machine learning in a first mode in which a learning result of the process of the first computing node is not reflected on the machine learning, and
   when the ratio is more than the threshold, cause each second computing node perform machine learning in a second mode in which training data to be processed by the process of the first computing node is distributed to and processed by the second computing nodes.

6. The information processing device according to claim 5, wherein the one or more processors are further configured to:

acquire each time of processing in the first mode and the second mode of a plurality of types of computing node groups of which the numbers of included computing nodes are different from each other, based on performance information of each of the plurality of computing nodes, and set a plurality of computing nodes included in a computing node group selected from the plurality of computing node groups as the second computing nodes based on the time.

# FIG. 1

# FIG. 2

15

NETWORK
CARD (NIC)

14

ACCELERATOR

11

CPU

13

HDD

12

MEMORY

10(10-1~10-n)

# FIG. 3

DISTRIBUTION TRAINING MANAGEMENT UNIT — 100

PERFORMANCE INFORMATION COLLECTION UNIT — 101

REDUCTION PROCESS NUMBER DETERMINATION UNIT — 102

MODE DETERMINATION UNIT — 103

PROCESSING TIME CALCULATION UNIT — 104

EXECUTION PROCESS NUMBER DETERMINATION UNIT — 105

10-1
(10)

# FIG. 4

PROCESS NUMBER:

1 epoch
(EIGHT ITERATIONS)

**A** — NORMAL EXECUTION

| | | | | | | | | |
|---|---|---|---|---|---|---|---|
| P0 | 100 | | | | | | |
| P1 | | | | | | | |
| P2 | | | | | | | |
| P3 | | | | | | | |
| P4 | | | | | | | |

500 PIECES OF DATA

> THERE ARE 4000 PIECES OF TRAINING DATA (E.G., THE NUMBER OF IMAGES) IN TOTAL, AND MINI BATCH SIZE PER PROCESS IS SET TO 100. AT THIS TIME, BECAUSE THERE ARE FIVE PROCESSES IN ENTIRE PROCESS FOR ONE UPDATE, 500 PIECES OF DATA IS USED FOR TRAINING. PROCESSING OF ONE EPOCH NEEDS EIGHT (= 4,000/500) TIMES OF PROCESSING.

**B** — SYNCHRONIZATION RELAXATION (DETACH MODE)

PROCESS P4 IS SET AS DELAYED PROCESS:

| | | | | | | | | |
|---|---|---|---|---|---|---|---|
| P0 | | | | | | | |
| P1 | | | | | | | |
| P2 | | | | | | | |
| P3 | | | | | | | |
| ~~P4~~ | | | NOT USED | | | | |

400 PIECES OF DATA

> IN SYNCHRONIZATION RELAXATION (SEPARATION), HERE, BECAUSE PROCESS P4 IS DELAYED, PROCESS P4 IS REMOVED FROM TRAINING GROUP. IN ENTIRE PROCESS, 400 (100 × 4) PIECES OF DATA IS USED, AND THERE ARE EIGHT ITERATIONS. THEREFORE, FOR ONE EPOCH, 3,200 (= 400 × 8) PIECES OF DATA IS PROCESSED.

**C** — SHRINK MODE

10 epoch
(TEN ITERATIONS)

| | | | | | | | | | | |
|---|---|---|---|---|---|---|---|---|---|
| P0 | | | | | | | | | |
| P1 | | | | | | | | | |
| P2 | | | | | | | | | |
| P3 | | | | | | | | | |
| ~~P4~~ | 400 PIECES OF DATA | | | | | | | | |

> IN DEGENERATION, WHEN DELAYED PROCESS P4 IS REMOVED, FOUR PROCESSES ARE INCLUDED. THEREFORE, SWITCHING TO EXECUTION BY FOUR PROCESSES IS PERFORMED. BECAUSE THE NUMBER OF PROCESSES IS FOUR, 400 (= 100 × 4) PIECES OF DATA IS PROCESSED FOR ONE UPDATE. BECAUSE 4000 PIECES OF DATA IS INCLUDED IN TOTAL, 10 (= 4,000/400) TIMES OF PROCESSING IS NEEDED. IN SHRINK MODE, BECAUSE DATA TO BE PROCESSED IS DISTRIBUTED TO REMAINING PROCESSES, THE NUMBER OF ITERATIONS (TIME) NEEDED TO PROCESS ONE EPOCH INCREASES.

EP 4 089 590 A1

# FIG. 5

DATA PROCESSING AMOUNT PER PROCESS

-BECAUSE "SYNCHRONIZATION IS RELAXED" IF LESS THAN CERTAIN PERCENTAGE, PROCESSING AMOUNT DOES NOT INCREASE
-BECAUSE "SHRINK MODE" IS PERFORMED IN A CASE WHERE EQUAL TO OR MORE THAN CERTAIN PERCENTAGE IS REDUCED, PROCESSING AMOUNT PER PROCESS INCREASES

D

E

REDUCED PROCESS NUMBER RATIO

CERTAIN PERCENTAGE (FOR EXAMPLE, 6%)

SYNCHRONIZATION RELAXATION (FIXED PROCESSING AMOUNT)

SHRINK MODE (PROCESSING AMOUNT INCREASES: SHARED BY REMAINING PROCESSES)

EP 4 089 590 A1

# FIG. 6

EXAMPLE OF COMPUTING NODE PERFORMANCE INFORMATION:

| a. 200 (PROCESSING AMOUNT)/60 (THROUGHPUT) = 3.33 (PROCESSING TIME) |
| --- |
| b. 300 (PROCESSING AMOUNT)/80 (THROUGHPUT) = 3.75 (PROCESSING TIME) |

# FIG. 7

```
                        ┌──────────┐
                        │  START   │
                        └──────────┘
                              │
                              ▼
        ┌─────────────────────────────────────────┐
        │   COLLECT PERFORMANCE INFORMATION         │ ⟋ A1
        │      (THROUGHPUT MEASUREMENT)             │
        └─────────────────────────────────────────┘
                              │
                              ▼
                                              ⟋ A2
               ◇                                        ◇        NO
        ◇          IS PERFORMANCE DETERIORATED?           ◇──────────┐
               ◇                                        ◇           │
                              │ YES                                 │
                              ▼                                     │
        ┌─────────────────────────────────────────┐                │
        │ ESTIMATE PROCESSING TIME WITH THE NUMBER  │                │
        │ OF PROCESSES IN A CASE WHERE PROCESSES ARE │ ⟋ A3          │
        │ REDUCED ONE BY ONE FROM LATER ONE         │                │
        └─────────────────────────────────────────┘                │
                              │                                     │
                              ▼                                     │
        ┌─────────────────────────────────────────┐                │
        │ DETERMINE THE NUMBER OF PROCESSES WITH THE │                │
        │ SHORTEST PROCESSING TIME AS THE NUMBER OF  │ ⟋ A4          │
        │ EXECUTION PROCESSES                        │                │
        └─────────────────────────────────────────┘                │
                              │                                     │
                              ▼◄────────────────────────────────────┘
                        ┌──────────┐
                        │   END    │
                        └──────────┘
```

# FIG. 8

START

SET THROUGHPUT OF LATEST PROCESS OF REMAINING PROCESSES AS THROUGHPUT OF GROUP — B1

IS THE NUMBER OF REDUCED PROCESSES EQUAL TO OR LESS THAN CERTAIN PERCENTAGE (6% OR THE LIKE)? B2

NO

PROCESSING AMOUNT PER PROCESS CHANGES (REDISTRIBUTE TO THE NUMBER OF REMAINING PROCESSES) B4

YES B3

PROCESSING AMOUNT PER PROCESS DOES NOT CHANGE

SET VALUE OBTAINED BY DIVIDING PROCESSING AMOUNT BY THROUGHPUT OF GROUP AS PROCESSING TIME WITH THE NUMBER OF PROCESSES — B5

END

# FIG. 9

NORMAL TIME

DATA PARALLELISM

PROCESS NUMBER: ⟶ PROCESSING FLOW

P3 | Fwd | Bwd | Comm. | Up.

P2 | Fwd | Bwd | Comm. | Up. ... (REPEAT)

P1 | Fwd | Bwd | Comm. | Up.

P0 | Fwd | Bwd | Comm. | Up.

Fwd : FORWARD PROCESSING
Bwd : BACKWARD PROCESSING
Comm. : Allreduce COMMUNICATION
Up. : UPDATE PROCESSING

EXTEND TIME

WITH DELAYED PROCESS

DATA PARALLELISM

PROCESS NUMBER: ⟶ PROCESSING FLOW

P3 | Fwd | Bwd | WAIT FOR SYNCHRONIZATION | Comm. | Up.

P2 | Fwd | Bwd | WAIT FOR SYNCHRONIZATION | Comm. | Up. ... (REPEAT)

P1 | Fwd | Bwd | Comm. | Up.

P0 | Fwd | Bwd | WAIT FOR SYNCHRONIZATION | Comm. | Up.

EP 4 089 590 A1

**EUROPEAN SEARCH REPORT**

Application Number

EP 22 15 9684

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HARLAP AARON ET AL: "Addressing the straggler problem for iterative convergent parallel ML", PROCEEDINGS OF THE SEVENTH ACM SYMPOSIUM ON CLOUD COMPUTING, SOCC '16, 5 October 2016 (2016-10-05), pages 98-111, XP055939886, New York, New York, USA DOI: 10.1145/2987550.2987554 ISBN: 978-1-4503-4525-5 Retrieved from the Internet: URL:https://www.pdl.cmu.edu/PDL-FTP/BigLearning/81-harlap.pdf> * page 1 - page 7; figures 2,3 * | 1-6 | INV. G06N3/08 G06N20/00 G06F9/50 |

TECHNICAL FIELDS SEARCHED (IPC)

G06N
G06F

The present search report has been drawn up for all claims

| Place of search | Date of completion of the search | Examiner |
|---|---|---|
| The Hague | 14 July 2022 | Nourestani, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160092765

- JP 2020177343 A

**Non-patent literature cited in the description**

- **KOICHI SHIRAHATA et al.** *Preliminary Performance Analysis of Distributed DNN Training with Relaxed Synchronization, https://www.jstage.jst.go.jp/article/transele/advpub/0/advpub_2020LHS0001/_a rticle/-char/ja*